Europäisches Patentamt

European Patent Office

Office européen des brevets

(11) Publication number: **0 334 646 B1**

# EUROPEAN PATENT SPECIFICATION

(45) Date of publication of patent specification: **20.10.93**  (51) Int. Cl.5: **H02K  49/04**, F04C 29/00

(21) Application number: **89302883.7**

(22) Date of filing: **22.03.89**

(54) **Hysteresis magnet coupling for roots type pumps.**

(30) Priority: **24.03.88 JP 68277/88**

(43) Date of publication of application:
**27.09.89 Bulletin  89/39**

(45) Publication of the grant of the patent:
**20.10.93 Bulletin  93/42**

(84) Designated Contracting States:
**DE FR GB**

(56) References cited:
**FR-A- 2 365 235**
**GB-A- 1 057 072**
**GB-A- 2 176 848**

(73) Proprietor: **NGK INSULATORS, LTD.**
**2-56, Suda-cho, Mizuho-ku**
**Nagoya City Aichi Pref.(JP)**

(72) Inventor: **Ushikoshi, Ryusuke 209 NGK Shingu**
**Apartments**
**106 Shingu-cho 1-chome**
**Handa City Aichi Pref.(JP)**

(74) Representative: **Paget, Hugh Charles Edward**
**et al**
**MEWBURN ELLIS & CO.**
**2/3 Cursitor Street**
**London EC4A 1BO (GB)**

EP 0 334 646 B1

## Description

The present invention relates to an improvement of a hysteresis magnet coupling, used for example for Roots type pumps, blowers, vacuum pumps and compressors.

GB-A-2 176 848 discloses a Roots pump as set out in the first part of claim 1.

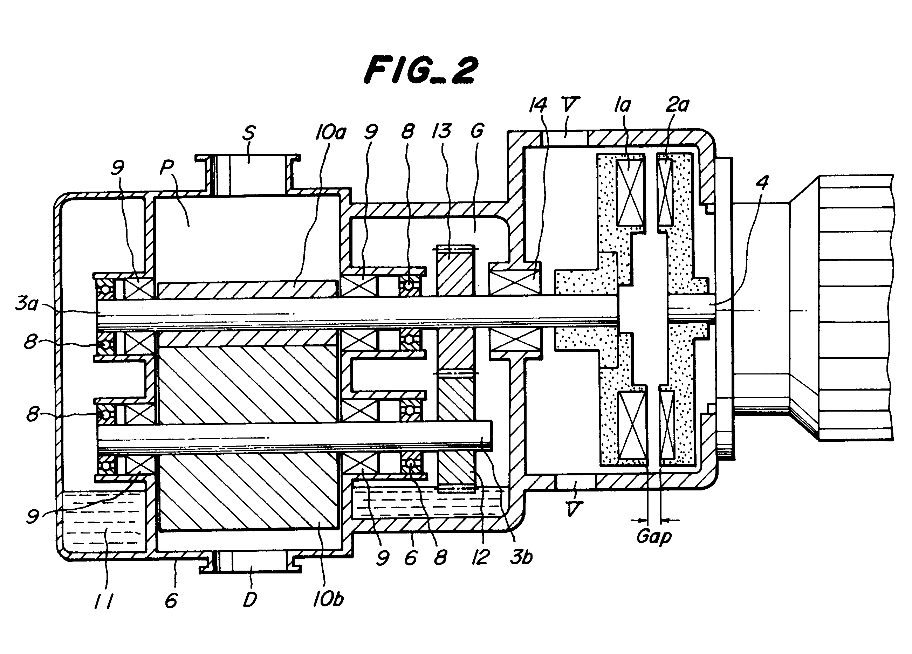

Hitherto, the hysteresis coupling comprises a magnet plate holding member provided with a magnet plate and a hysteresis plate holding member provided with a hysteresis plate for transmitting a torque without contact to each other such as to transmit a torque under a slipping condition when the torque exceeds a specified limit during rotation. The hysteresis coupling may be connected to a machine for example a pump to provide a gap of at most 1 mm between the hysteresis plate and the magnet plate without any interrupter therebetween (see Fig. 2 which is not published).

Conventional pumps are provided with sealing members such as a mechanical seal, oil seal or the like. In particularly, when the hysteresis coupling is applied for a pump provided with a number of sealing members, there are problems as follows;

(1) Power loss of machine owing to the seal member is large and frequently exceeds the torque of the coupling so that the machine could not be started when the machine is operated after a long rest term.

(2) When the machine is operated under an over load, a driving shaft and a pump shaft begins to slip and the hysteresis plate is heated by an eddy current occurred in a magnetic field as the amount of the slippage becomes large. The heat generated at the hysteresis plate is transferred to the magnet plate and causes the reduction of the magnetic force of the magnet, so that a specified transmitting torque cannot be maintained.

(3) The heat transferred to the magnet plate from the hysteresis plate is transferred to the seal members through the pump shaft and results in seizure the seal member of the pump shaft and the others by baking.

It is an object of the present invention to provide a new and unique coupling adapted for performing a stabilized continuous operation under an overload without the above mentioned drawbacks caused by the slippage of the magnet coupling.

The present invention is set out in claim 1.

Embodiments of the invention will be now described with reference to the accompanying drawings, in which:

Fig. 1 is a schematic vertical sectional view of a hysteresis magnet coupling according to the present invention;

Fig. 2 is a schematic vertical sectional view of a hysteresis magnetic coupling;

Figs. 3a, 3b and 3c are schematic views illustrating diaphragm mounting constructions;

Fig. 4 is a graph showing temperature variations of magnet plates;

Figs. 5a, 5b and 5c are schematic views illustrating operation of a pump.

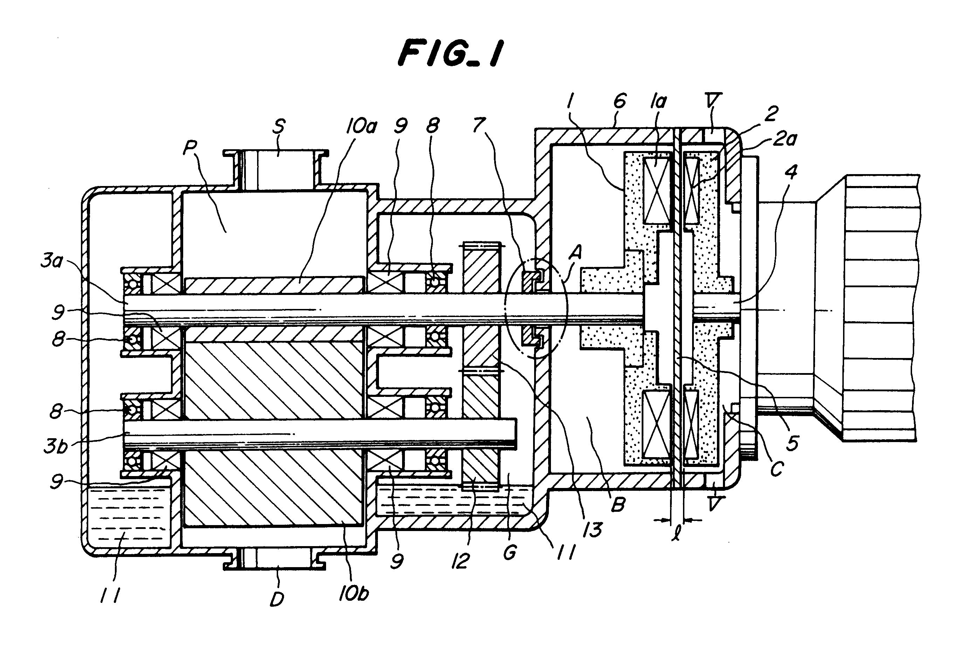

Referring to Fig. 1, a hysteresis magnet coupling according to the present invention is assembled in a Roots type vacuum pump and its driving device. The hysteresis magnet coupling includes a magnet plate holding member 1 provided with a magnet plate 1a and a hysteresis plate holding member 2 provided with a hysteresis plate 2a. These holding plates 1 and 2 are spaced from each other and rigidly connected to an end of a pump shaft 3a and an end of a motor shaft 4, respectively. A diaphragm 5 of a non-magnetic material is interposed in a space of a width "ℓ" between the magnet plate 1a and the hysteresis plate 2a such as to be out of contact with these plates 1a and 2a.

The diaphragm 5 is hermetically sealed at its periphery to a pump housing 6 to divide an inner space within the pump housing 7 to two chambers "B" and "C" containing rotating members 1 and 2, respectively. The pump shaft 3a is extended through an opening in a partition wall from the chamber "B" into a gear chamber "G" and is provided with a slinger 7 cooperating with a groove formed in the partition wall. A portion of the pump housing 6 of the chamber "C" is provided with a plurality of vents "V".

The pump shaft 3a is rotatably supported on side walls of the pump chamber "P" by means of bearings 8 and is sealed by means of seals 9. A first pump rotor 10a is rigidly mounted on the pump shaft 3a and a second pump rotor 10b is also rigidly mounted on a second pump shaft 3b which is rotatably supported in parallel with the pump shaft 3a and is driven through gears 12 and 13 disposed in a gear chamber "G" by the pump shaft 3a such as to cooperate with each other in a pump chamber "P" having a suction port "S" and a discharge port "D".

The diaphragm interposed between the magnet plate 1a and the hysteresis plate 2a substantially prevents heat generated at the hysteresis plate 2a in the chamber "C" from transferring to the magnet plate 1a during a continuous operation under an overload and shuts the chamber "B" surrounding the holding member 1 secured to the end of the pump shaft 3a from the outside air. Accordingly, the opening in the partition wall through which the pump shaft 3a is extended from the chamber "B" into the gear chamber "G" can be provided with a non-contact type seal such as a slinger 7 of simple and inexpensive construction to simply prevent a lubricant oil 11 from leaking out of the gear chamber "G" instead of an expensive contact type mechanical seal shown in Fig. 2 which can generate substantial heat. Furthermore it is unnecessary to use such an expensive seal as a magnetic fluid seal or the like.

It is preferable to use a diaphragm satisfying the following conditions;

1) to have a high heat insulating property to prevent heat generated at the hysteresis plate 2a from transferring to the magnet plate 1a.

2) to be non-magnetic and not to affect the transmittance of a magnetic field between the magnet plate 1a and the hysteresis plate 2a.

3) to be non-conducting (having a large electric resistance) and not generating an eddy current by a rotation of a magnetic field.

4) to have a high modulus of elasticity to be able to resist a differential pressure without contacting of the magnet plate by deforming and to achieve a thin diaphragm as possible, since the transmitting torque is proportional to (space "$\ell$")$^{-3}$ .

5) to have a sufficient heat resistance to resist a temperature above 100°C generated at the hysteresis plate.

The above conditions for the diaphragm can be satisfied by using ceramics, especially partially stabilized zirconia (referred as PSZ hereunder) ceramics having high heat insulating property as shown in Table 1.

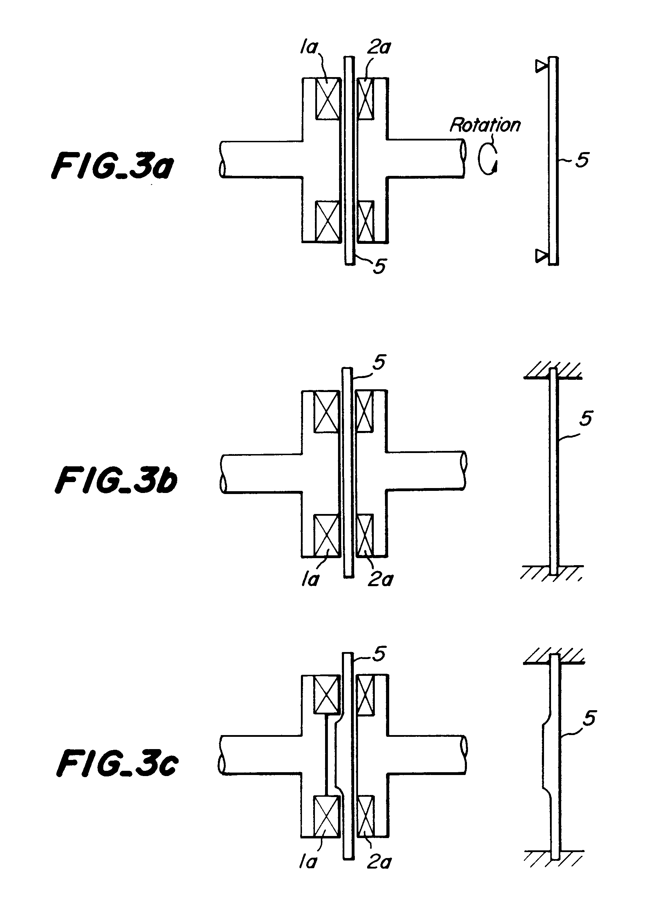

The diaphragm may be fixed at its peripheral portion only in the axial direction as shown in Fig. 3 or may be completely fixed and the shape of its section may be varied according to the construction of the coupling. In case of a diaphragm being deformed and stressed by the differential pressure, the shape shown in Fig. 3c is most effective for decreasing the deformation.

Table 1

| | | Non-magnetic property | Electric insulating property | Modulus of elasticity ($\times 10^4$ kg/mm$^2$) | Temperature (more than 100°C) | Heat conductivity (cal/cm, °C, s) |
|---|---|---|---|---|---|---|
| Metal | Carbon steel | X | X | 2.1 | O | 0.12 |
| | Stainless steel | O | X | 1.77 | O | 0.04 |
| Phenol resin | | O | O | 0.0011 | X | 0.0008 |
| SiC (silicon carbide) | | O | O | 3.6 | O | 0.31 |
| SSN (Silicon nitride) | | O | O | 2.3 | O | 0.07 |
| A$\ell_2$O$_3$ | | O | O | 3.0 | O | 0.04 |
| PSZ | | O | O | 2.1 | O | 0.007 |
| O has a faculty or can be used<br>X has no faculty or can not be used | | | | | | |

Referring to Fig. 1, hysteresis plate should be connected to the drive shaft (Motor shaft 4) rather than to driven shaft (Pump shaft 3a) to prevent heat generated at the hysteresis plate 2a from transferring to the pump shaft 3a. Particularly, in order to release the heat generated at the hysteresis plate 2a during slipping of the coupling to the air from vents, the hysteresis plate 2a is preferably connected to the driving shaft which is rotated at high number of revolution and is effectively cooled by the atmosphere. So the housing surrounding the holding members of the hysteresis plate should be opened to the air in order to release heat of hysteresis plate to the air. The type of coupling is not limited to the disk shape, but may be cylindrical shape.

In the embodiment as shown in Fig. 1, the magnet plate 1a is spaced from the hysteresis plate 2a by 4 mm distance and the diaphragm of PSZ ceramics of 3.0 mm in thickness is interposed between the magnet plate 1 and the hysteresis plate 2a. A vacuum pump having a discharge port of 50 mm in diameter is used and operated in a condition mentioned below, to measure a temperature variation of the magnet plate 1a.

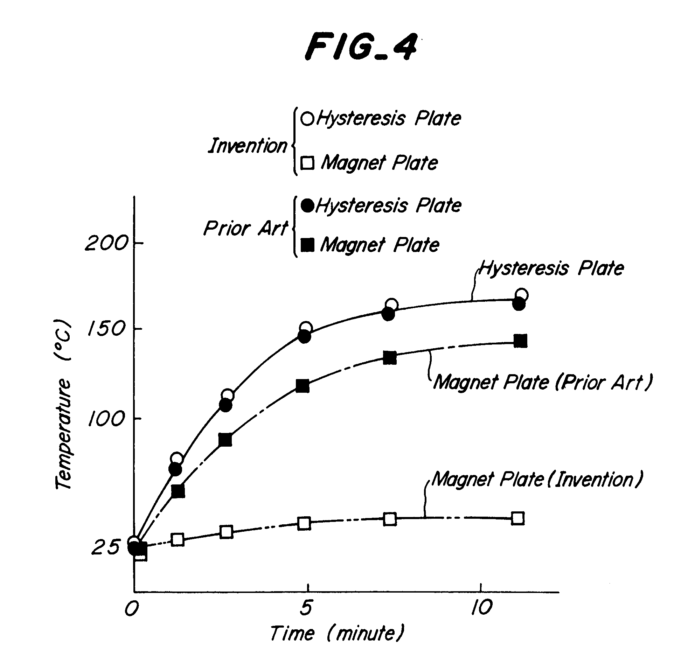

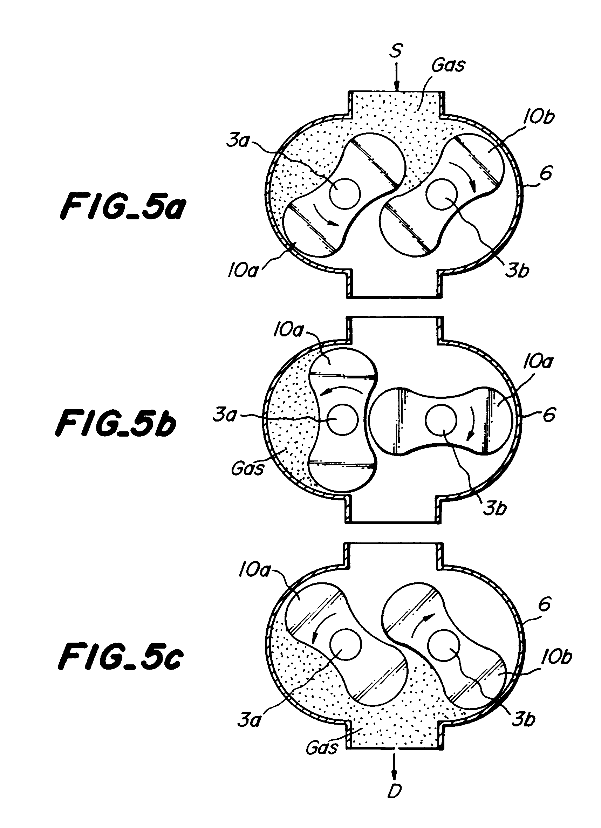

The results of tests of the present invention is shown in Fig. 4 together with results of the comparative prior art having a setting of 0.5 mm gap between a magnet plate and a hysteresis plate without the diaphragm and the operation modes of the pump are shown in Figs. 5a, 5b, 5c, respectively.

| An operation condition | |
|---|---|
| Rotation speed of motor | 3,500 rpm |
| Free gas displacement | 100 m$^3$/hr |
| Useful end vacuum | 2 × 10$^{-2}$ torr |
| Difference of rotational speed between motor shaft and pump shaft | 2,000 rpm |
| Revolutional speed of pump shaft | 1,500 rpm |
| Specified magnetic coupling torque | 13 Kg•cm |
| Motor size | 0.75 KW |

It is noted that the hysteresis coupling of the embodiment has a distance "ℓ" of 4 mm which is larger than that of the prior art and therefore the size of the coupling is made large so as to unify the specified torque.

It is seen from Fig. 4, according to the present invention the temperature rise of the magnet plate 5 minutes after start of the motor is 15°C and after that its temperature rise is very little so that the reduction of magnetic force of the magnet is very little. Accordingly an unexpensive magnet which is unusable at a temperature higher than 100°C can be used.

According to the present invention even if the hysteresis plates were heated by a slippage during a continuous operation under an overload, the transfer of the heat can be minimized so that heating-up of pump members rotating at a high speed in the pump chamber and a deterioration of viscosity of a lubricant oil by its temperature raise are avoided. Accordingly, the specified torque can be maintained and the operation can be stabilized. Furthermore a semi-permanent seal can be provided without use of a mechanical seal or the other which causes a large power loss and cannot keep the complete seal.

## Claims

1. A Roots type pump having a pair of Roots type rotors (10a,10b) and a magnetic coupling comprising a driven member (1,1a) and a driving member (2,2a), said driving member (2,2a) being rigidly connected to a driving shaft (4) driven by a driving device for the pump and the said driven member (1,1a) being rigidly connected to a pump shaft (3a) for driving said pair of Roots type rotors, and there being a diaphragm (5) of ceramics material of a non-magnetic material interposed between the driven member (1,1a) and the driving member (2,2a) and connected at its periphery to a pump housing (6) surrounding said driven member (1,1a) and the support members of said pump shaft (3a),
   characterized in that said magnet coupling is a hysteresis coupling and said driving member comprises a hysteresis plate holding member (2) carrying a hysteresis plate (2a) while said driven member comprises a magnet plate holding member (1) and carrying a magnet plate (1a) opposite said hysteresis plate (2a), and in that a portion of the pump housing (6) surrounding the hysteresis plate (2a) is provided with a plurality of vents (V) to release heat of the hysteresis plate (2a).

2. A coupling as claimed in claim 1, wherein said diaphragm (5) of non-magnetic material is hermetically sealed at its periphery to said pump housing (6).

3. A coupling as claimed in claim 1 or claim 2, wherein the diaphragm (5) is made of partially stabilized zirconia ceramics.

## Patentansprüche

1. Pumpe vom Rootstyp, die ein Paar Rotoren vom Rootstyp (10a,10b) und eine magnetische Kupplung aufweist, die ein angetriebenes Element (1,1a) und ein Antriebselement (2,2a) umfaßt, wobei das genannte Antriebselement (2,2a) starr mit einer Antriebswelle (4) verbunden ist, die von einer Antriebsvorrichtung für die Pumpe angetrieben wird, und das genannte angetriebene Element (1,1a) starr mit einer Pumpenwelle (3a) verbunden ist, um das genannte Paar von Rotoren vom Rootstyp anzutreiben, und wobei eine Membran (5) aus Keramikmaterial aus einem nichtmagnetischen Material zwischen dem angetriebenen Element (1,1a) und dem Antriebselement (2,2a) angeordnet ist und an ihrer Peripherie mit einem Pumpengehäuse (6) verbunden ist, das das genannte angetriebene Element (1,1a) und die

4

Stützelemente der genannten Pumpenwelle (3a) umgibt,
dadurch gekennzeichnet, daß die genannte Magnetkupplung eine Hysteresekupplung ist und das genannte Antriebselement ein Hystereseplattenhalteelement (2) umfaßt, das eine Hystereseplatte (2a) trägt, während das genannte angetriebene Element gegenüber der genannten Hystereseplatte (2a) ein Magnetplattenhalteelement (1) umfaßt, das eine Magnetplatte (1a) trägt, und dadurch, daß ein Abschnitt des Pumpengehäuses (6), der die Hystereseplatte (2a) umgibt, mit einer Vielzahl von Lüftungsöffnungen (V) versehen ist, um Wärme der Hystereseplatte (2a) abzugeben.

2. Kupplung nach Anspruch 1, worin die genannte Membran (5) aus nichtmagnetischem Material an ihrer Peripherie hermetisch dicht an das genannte Pumpengehäuse (6) angefügt ist.

3. Kupplung nach Anspruch 1 oder 2, worin die Membran (5) aus teilweise stabilisierter Zirkoniakeramik besteht.

## Revendications

1. Pompe du type Roots ayant une paire de rotors du type Roots (10a, 10b) et un accouplement magnétique comprenant un organe mené (1, 1a) et un organe menant (2, 2a), ledit organe menant (2, 2a) étant rigidement connecté à un arbre d'entraînement (4) qui est mené par un dispositif d'entraînement pour la pompe et ledit organe mené (1, 1a) étant rigidement connecté à un arbre de pompe (3a) pour entraîner ladite paire de rotors du type Roots avec une membrane (5) en une céramique d'un matériau non magnétique interposée entre l'organe mené (1, 1a) et l'organe menant (2, 2a) et connectée à son pourtour à un carter de pompe (6) entourant ledit organe mené (1, 1a) et l'organe de support dudit arbre de pompe (3a),
   caractérisée en ce que ledit accouplement magnétique est un accouplement à hystérésis et ledit organe menant comprend un organe (2) de maintien de la plaque d'hystérésis portant une plaque d'hystérésis (23a) tandis que ledit organe mené comprend un organe (1) de maintien d'une plaque magnétique portant une plaque magnétique (1a) faisant face à ladite plaque d'hystérésis (2a) et en ce qu'une portion de carter de pompe (6) entourant la plaque d'hystérésis (2a) est pourvue d'un certain nombre d'évents (V) pour libérer la chaleur de la plaque d'hystérésis (2a).

2. Accouplement selon la revendication 1, caractérisé en ce que ladite membrane (5) en un matériau non magnétique est hermétiquement scellée à son pourtour audit carter de pompe (6).

3. Accouplement selon la revendication 1 ou la revendication 2, où la membrane (5) est faite en une céramique de zircone partiellement stabilisée.

FIG.1

FIG. 2

FIG.3a

*la* *2a*

Rotation

*5*

*5*

FIG.3b

*5*

*5*

*la* *2a*

FIG.3c

*5*

*5*

*la* *2a*

# FIG_4

Invention
- ○ Hysteresis Plate
- □ Magnet Plate

Prior Art
- ● Hysteresis Plate
- ■ Magnet Plate

Hysteresis Plate

Magnet Plate (Prior Art)

Magnet Plate (Invention)

Temperature (°C)

200

150

100

25

Time (minute)

0        5        10

EP 0 334 646 B1

FIG_5a

FIG_5b

FIG_5c